# EUROPEAN PATENT SPECIFICATION

(11) **EP 2 367 613 B1**
(45) Date of publication and mention of the grant of the patent: **28.03.2018**
(21) Application number: 09795517.3
(22) Date of filing: 08.12.2009
(51) Int. Cl.: B01D 61/00, B01D 61/58, C02F 1/44, B01D 61/02

(54) **MEMBRANE BASED SOLVENT SEPARATION PROCESS**
LÖSUNGSMITTELTRENNVERFAHREN AUF MEMBRANBASIS
PROCÉDÉ DE SÉPARATION D UN SOLVANT À L AIDE D UNE MEMBRANE

(30) Priority: 08.12.2008 GB 0822359
(43) Date of publication of application: 28.09.2011
(73) Proprietor: Surrey Aquatechnology Limited, Guildford, Surrey GU3 1LR (GB)
(72) Inventor: SHARIF, Adel, Surrey GU2 7XH (GB)
(74) Representative: HGF Limited
(86) International application number: PCT/GB2009/002844
(87) International publication number: WO 2010/067063

(56) References cited:
- WO-A1-2005/012185
- WO-A1-2008/050087
- US-A- 5 158 683
- US-A1- 2004 055 955
- US-A1- 2006 144 789
- US-B1- 6 190 556

## Description

The present invention relates to a process for separating a solvent (e.g. water) from a solution. In particular, although not exclusively, the present invention relates to a process for removing water from an aqueous solution, such as seawater.

WO 2005/012185 describes a process for removing a solvent from solution, for instance for separating water from seawater, although not exclusively. The process involves positioning a semi-permeable membrane between the first solution, which may be seawater, and a second solution having a higher osmotic potential than the first. The difference in solute concentrations (osmotic potential) causes the solvent from the first solution to flow across the membrane to dilute the second solution by direct osmosis. The diluted second solution is then passed through a nanofiltration or reverse osmosis membrane. The relatively large species in the second solution are retained by the nanofiltration membrane or reverse osmosis membrane, while water passes through the nanofiltration membrane or reverse osmosis membrane.

Although the separation process described in WO 2005/012185 is effective, it has been found that some solute species from the first solution flows across the membrane into the second solution in the direct osmosis step. These species may affect the osmotic pressures of both the diluted and concentrated second solutions and furthermore a portion may be retained within the concentrated second solution following treatment in the nanofiltration or reverse osmosis membrane. The retention of these species from the first solution within the recirculating second solution, affects the stability of the process and these species may be undesirable from a corrosion perspective, increasing osmotic pressure beyond that desired and may adversely affect the solvent produced from the second solution via the nanofiltration or reverse osmosis step, particularly, if present above threshold concentrations.
According to the present invention, there is provided a process for separating solvent from a source solution, which comprises
positioning a selective membrane between a source solution and a draw solution having a higher solute concentration than the source solution, such that solvent from the source solution flows across the selective membrane by direct osmosis to dilute the draw solution, leaving concentrated source solution on the retentate- side of the selective membrane,
wherein the source solution comprises a second solute, and wherein the draw solution comprises a first solute;
passing the diluted draw solution through a selective membrane under reverse osmosis conditions to separate solvent from the solution, and
intermittently passing at least a portion of the draw solution on the retentate-side of the selective membrane through a nanofiltration membrane to separate further solvent from the portion of draw solution, wherein a portion of the solution on the retentate-side of the nanofiltration membrane is recycled to the direct osmosis step;
wherein the solution that is passed through the selective membrane under reverse osmosis conditions comprises a first solute and a second solute, wherein the first solute and second solute are substantially retained by the selective membrane in the reverse osmosis step, and the first solute and not the second solute is substantially retained by the nanofiltration membrane in the nanofiltration step and wherein the second solute may pass the first selective membrane.
As mentioned above, solvent is separated from the solution using reverse osmosis.

The selective membrane employed in the reverse osmosis step (i.e. the reverse osmosis membrane) advantageously has an average (e.g. mean) pore size that is sufficiently· small to retain solutes, such as sodium chloride and magnesium sulphate, on the retentate-side of the membrane. As a result, solvent (e.g. water) passing through the selective membrane is substantially free of these solutes.

To prevent the undesirable accumulation of any potentially corrosive solutes, such as sodium chloride, on the retentate-side of the membrane, at least a portion of the solution on the retentate-side of the membrane is purged by intermittently passing the portion of solution through a nanofiltration membrane. The frequency and/or duration of 'the nanofiltration step may be adjusted so ifs to maintain the concentration of undesirable solutes on the retentate-side of the membrane below a threshold value.

As mentioned above, at least a portion of the solution on the retentate-side of the selective membrane and/or at least a portion of the residual solution is passed intermittently through a nanofiltration membrane to separate further solvent from the portion of solution. By "intermittent", it is meant that the portion of solution is not passed continuously through the nanofiltration membrane throughout the duration of the reverse osmosis step. Instead, the portion of solution is passed through the nanofiltration membrane in a discontinuous or start-stop manner, such that, during the duration of the process, the reverse osmosis or thermal separation step can take place without the nanofiltration step occurring at the same time. For example, at least a portion of the solution on the retentate-side of the selective membrane is passed through the nanofiltration membrane for 0.1 to 10 hours, preferably 0.25 to 5 hours, more preferably 1 to 2 hour's." This -nanofiltration step may then be stopped for, for example, for 0.1 to 10 hours, preferably 0.25 to 5 hours, more preferably 1 to 2 hours, before being resumed again, as described above.

The nanofiltration step may be carried out in a series of steps. For example, two or more nanofiltration units may be employed in series. Alternatively or additionally, the nanofiltration units may be run in parallel.

The average pore size (e.g. mean) of the nanofiltration membrane is sufficiently large to allow solutes, such as sodium chloride, to pass through the membrane, but sufficiently small to prevent solutes, such as magnesium sulphate and other desirable chemical additives, from passing through the membrane. By allowing solutes, such as sodium chloride, to pass through the nanofiltration membrane in this manner, the concentration of solutes, such as sodium chloride, on the retentate-side of the selective membrane is kept below a threshold value, reducing the risk of corrosion of process equipment. Although the nanofiltration membrane can allow solutes, such as sodium chloride, to pass into the filtrate, the concentration of such solutes can be kept below a threshold value by controlling the frequency and/or duration of the nanofiltration step. In this way, a balance may be struck between the risks associated with the build-up of any corrosive solutes in the process
equipment and the purity of separated solvent eventually obtained.

The reverse osmosis step may be carried out in a series of steps and at an elevated pressure to drive the (liquid) solution through the selective membrane. For example, the reverse osmosis step may be carried out at a pressure of 25 to 120 bar, preferably 50 to 100 bar, more preferably 60 to 80 bar.

The nanofiltration step may also be carried out at an elevated pressure. For example, the nanofiltration step may be carried out at a pressure of 25 to 120 bar, preferably 40 to 100 bar, more preferably 50 to 80 bar. As mentioned above, solution from the retentate-side of the selective membrane of the reverse osmosis step is passed through the nanofiltration membrane. Since this solution is on the high pressure side of the membrane, it may not be necessary to apply further pressure to the solution as it passes through the nanofiltration membrane. However, it is possible to apply further pressure to the solution as it passes through the nanofiltration membrane, if desired.

The selective membrane employed in the reverse osmosis step may have an average (e.g. mean) pore size of 0.5 to 80 Angstroms, preferably, 2 to 50 Angstroms. In a preferred embodiment, the membrane has an average (e.g. mean) pore size of from 3 to 30 Angstroms. The pore size of the membrane may be selected depending on the size of the solutes that require separation. For example, to separate sodium chloride from the solution, the average (e.g. mean) pore size of the membrane may be 1 to 10 Angstroms, for example, 3 to 10 Angstroms. Pore size (e.g. mean pore size) may be measured using any suitable technique. For example, a differential flow method may be employed (Japan Membrane Journal, vol. 29; no. 4; pp. 227 - 235 (2004)).

Suitable selective membranes for the reverse osmosis step include integral membranes and composite membranes. Specific examples of suitable membranes include membranes formed of cellulose acetate (CA) and/or cellulose triacetate (CTA), such as or similar to those used in the study of McCutcheon et al., Desalination 174 (2005) 1-11 and membranes formed of polyamide (PA). An array of membranes may be employed.

The selective membrane may be planar or take the form of a tube or hollow fibre. For example, a tubular configuration of hollow fine fibre membranes may be used. If desired, the membrane may be supported on a supporting structure, such as a mesh support. When a planar membrane is employed, the sheet may be rolled such that it defines a spiral in cross-section. When a tubular membrane is employed, one or more tubular membranes may be disposed within a housing or shell. The solution may be introduced into the housing, whilst the solvent may be removed as a filtrate from the tubes or vice-versa.

The selective membrane employed in the reverse osmosis step preferably has a smaller average pore size than the nanofiltration membrane employed in the nanofiltration step. In one embodiment, the average pore diameter of the membrane used in the reverse osmosis step is 10 to 80%, preferably 20 to 50%, of the average pore diameter of the nanofiltration membrane.

The reverse osmosis step may be carried out in one or more stages. For example, one or more reverse osmosis units may be employed in series or parallel.

The membrane employed in the nanofiltration step may have an average (e.g. mean) pore size of 4 to 80 Angstroms. Preferably, the average (e.g. mean) pore size of the membrane is 10 to 70 Angstroms, more preferably 30 to 60 Angstroms, and most preferably 10 to 50 Angstroms. Pore size (e.g. mean pore size) may be measured using any suitable technique. For example, a differential flow method may be employed (Japan Membrane Journal, vol. 29; no. 4; pp. 227 - 235 (2004)).

The membranes used in the nanofiltration step may be cast as a "skin layer" on top of a support formed, for example, of a microporous polymer sheet. The resulting membrane may have a composite structure (e.g. a thin-film composite structure). Typically, the separation properties of the membrane are controlled by the pore size and electrical charge of the "skin layer".

Examples of suitable nanofiltration membranes include Desal-5 (Desalination Systems, Escondido, California), NF 70, NF 50, NF 40, NF 40 HF membranes (FilmTech Corp., Minneapolis, Minn), SU 600 membrane (Toray, Japan) and NRT 7450 and NTR 7250 membranes (Nitto Electric, Japan).

The nanofiltration membrane may be planar or take the form of a tube or hollow fibre. For example, a tubular configuration of hollow fine fibre membranes may be used. If desired, the membrane may be supported on a supporting structure, such as a mesh support. When a planar membrane is employed, the sheet may be rolled such that it defines a spiral in cross-section. When a tubular membrane is employed, one or more tubular membranes may be disposed within a housing or shell. The solution may be introduced into the housing; whilst the solvent may be removed as a filtrate from the tubes or vice-versa.

The solution that is passed through the selective membrane under reverse osmosis conditions comprises one or more solutes. The solution comprises a first solute and a second solute that are sufficiently large to be retained by the selective membrane in the reverse osmosis step. However, only one of the first and second solutes is large enough to be substantially retained by the nanofiltration membrane.

Suitable solutes for use in the solution that is passed through the selective membrane in the reverse osmosis step include organic compounds and inorganic compounds. Suitable organic compounds include sugars, such as glucose, fructose and sucrose. The solutes may also include water-soluble organic polymers.

Suitable inorganic compounds include acids, bases and salts. Mixtures of two or more inorganic compounds may be employed. In a preferred embodiment, salts are employed, for example, as the first solute and/or the second solute.

The salt may be a metal salt or an ammonium salt. Suitable metal salts include salts of Groups I to III
metals. Examples of suitable Group I metal salts include salts of sodium and potassium. Examples of suitable Group II metal salts include salts of magnesium, calcium, strontium and barium. Examples of suitable Group III salts include salts of aluminium. Salts of complex cations may also be employed.

Where ammonium salts are employed, such salts may be salts of substituted or unsubstituted ammonium ions. Where substituted ammonium ions are used, these may be substituted with alkyl groups, such as C₁ to C₂₀ alkyl groups.

Suitable anionic species include fluorides, chlorides, bromides, iodides, sulphates, sulphites, sulphides, carbonates, hydrogencarbonates, nitrates, nitrites, nitrides, phosphates, hydrogenphosphates, aluminates, borates, bromates, carbides, chlorides, perchlorates, hypochlorates, chromates, fluorosilicates, fluorosilicates, fluorosulphates, silicates, cyanides and cyanates.

Preferred salts for use as the first solute include magnesium sulfate (MgSO₄.6H₂O or MgSO₄.7H₂O), magnesium chloride (MgCl₂.6H₂O), sodium sulfate (Na₂SO₄. 10H₂O), calcium chloride (CaCl₂.2H₂O or CaCl₂.6H₂O), Borax (Na₂B₄O₇) disodium hydrogenphosphate (Na₂HPO₄.12H₂O) and potassium alum (24H₂O). In a preferred embodiment, the first solute is magnesium sulfate (MgSO₄.6H₂O or MgSO₄.7H₂O). This solute can be separated by both the membranes used in the reverse osmosis step and the nanofiltration step.

Preferred salts for use as the second solute include sodium chloride. Preferably, this solute can be separated by the membrane used in the reverse osmosis step but is not substantially separated by the membrane used in the nanofiltration step. The nanofiltration membrane may, however, retain a portion of the second solute. For example, up to 40%, preferably up to 30%, more preferably up to 20%, and even more preferably up_to·10% of the second solute may be retained by the nanofiltration membrane.

In a preferred embodiment of the present invention, the solution that is passed through the selective membrane in the reverse osmosis step is produced by a direct osmosis step. This step may be carried out by positioning a selective membrane between a source solution and a draw solution having a higher solute concentration than the source solution. The difference in concentration causes solvent from the source solution to flow across the selective membrane by direct osmosis to dilute the draw solution. The solvent flows across the membrane in the direct osmosis step in liquid form. The diluted draw solution is then passed through the selective membrane in the reverse osmosis step or subjected to thermal separation to separate solvent from the diluted draw solution and produce a residual, more concentrated solution.

The source solution may be any source solution that requires purification. Examples of suitable source solutions include brine solutions, such as seawater, brackish water and waste water from industrial processes. Preferably, the source solution is seawater.

Where a direct osmosis step is used, the direct osmosis units are preferably submerged or partially
submerged in the source solution. For example, where the source solution is seawater, the direct osmosis units may be submerged or partially submerged in the sea.

The subsequent reverse osmosis and/or nanofiltration unit(s) may also be submerged or partially submerged in the source solution. For example, where the source solution is seawater, the reverse osmosis and/or nanofiltration unit(s) may also be submerged or partially submerged in the sea.

The direct osmosis step may be carried out in stages, for example, by using two or more direct osmosis units in sequence or in parallel.

The direct osmosis unit may be operated at relatively low pressure. For example, the flow of water from the source solution across the membrane may exert a pressure of 0.1 to 5.0 MPa, preferably 0.1 to 3.0 MPa on the membrane.

Additionally, the direct osmosis unit may be operated by injecting air on the seawater side or the draw solution side to enhance the water flux through the membrane and to assist in cleaning.

As described above, solvent is extracted from the source solution by direct osmosis. This direct osmosis step is carried out by positioning a selective membrane between a source solution and a draw solution having a higher solute concentration than the source solution. The draw solution may be formed by dissolving at least one solute in a solvent (e.g. water), such that the solute concentration of the draw solution exceeds the solute concentration of the source solution.

Suitable solutes for forming the draw solution are described above in relation to the solution that is passed through the selective membrane under reverse osmosis conditions. Preferably, the draw solution is formed by dissolving one of the first solutes described above in solvent (e.g. water). Such solutes may be separated using large pore membranes, such as the nanofiltration membrane used in the nanofiltration step, as well as small pore membranes, such as the selective membranes used in the reverse osmosis step. In one embodiment, the draw solution may be formed by dissolving a solute selected from at least one of magnesium sulfate (MgSO₄.6H₂O or MgSO₄.7H₂O), magnesium chloride (MgCl₂.6H₂O), sodium sulfate (Na₂SO₄. 10H₂O), calcium chloride (CaCl₂.2H₂O or CaCl₂.6H₂O), Borax (Na₂B₄O₇) disodium hydrogenphosphate (Na₂HPO₄.12H₂O) and potassium alum (24H₂O) in a solvent, such as water. In a preferred embodiment, the draw solution is formed by dissolving magnesium sulfate (MgSO₄.6H₂O or MgSO₄.7H₂O) in water.

The draw solution may additionally contain additives, such as anti-scaling, anti-corrosion, pH-regulating and/or anti-microbial agents.

The draw solution may have an initial solute concentration of at least 30 weight %, preferably at least 50 weight %, prior to contact with the selective membrane in the direct osmosis step. The draw solution may have an initial solute concentration or osmotic pressure that is at least 50% more than the osmotic pressure of the source solution. The initial solute concentration of the draw solution may be tailored depending on the initial solute concentration of the source solution. For example, if the source solution is seawater, the draw solution may be made, such that it has an initial solute concentration that is higher (e.g. by at least 10%, preferably at least 30%) than that of seawater to ensure that water can flow across the membrane to dilute the draw solution by direct osmosis.

In certain embodiments of the invention, steps are taken to ensure that the concentration and/or osmotic potential of the solution of dissolved components is at its target value prior to contact with the membrane. For example, the solution may be treated by electrodialysis, electrodialysis reversal and electrochemical treatment (e.g. capacitive deionisation and ion-exchange). Alternatively or additionally, the temperature and/or pH of the solution may be controlled so as to alter the concentration of the solution accordingly and/or its osmotic pressure (potential).

As the initial solute concentration of the draw solution is higher than the solute concentration of the source solution, solvent (e.g. water) flows across the selective membrane from the source solution to dilute the draw solution by direct osmosis. Some solute from the source solution may also pass across the membrane during this process. For example, where the source solution contains sodium chloride, sodium chloride may flow across the membrane into the draw solution. The diluted draw solution, therefore, may contain a second solute, such as sodium chloride, in addition to the first solute(s) used to produce the original draw solution. In one embodiment, the diluted draw solution includes sodium chloride from the source solution (e.g. brine) in addition to the magnesium sulphate that is used to form the original draw solution.

The diluted draw solution, containing its original first solute(s) and any second solute from the source-solution, is preferably passed through a selective membrane under reverse osmosis conditions. Advantageously, the average pore size of the selective membrane is sufficiently small to prevent the solutes from passing across the membrane into the filtrate. Accordingly, the filtrate passing through the selective membrane is substantially free of solute. The residual solution on the retentate-side of the selective membrane comprises a high concentration of solute(s). A portion of this concentrated solution is optionally recycled to the direct osmosis step, for example, for use as or to produce fresh draw solution for the direct osmosis step. This ensures that the osmotic agent (e.g. magnesium sulphate) and/or additive(s) used to form the draw solution are at least partly re-used.

To prevent the undesirable accumulation of any potentially corrosive solutes, such as sodium chloride, on the retentate-side of the membrane, at least a portion of the solution on the retentate-side of the membrane is purged by intermittently passing the portion of solution through a nanofiltration membrane. Advantageously, the average pore size of the nanofiltration membrane is sufficiently large to allow at least a significant proportion of solutes, such as sodium chloride, to pass through the membrane, but sufficiently small to prevent solutes, such as magnesium sulphate, from passing through the membrane. As a result, the residual solution on the retentate-side of the nanofiltration membrane comprises a high concentration of, for example, magnesium sulphate. A portion of this residual solution is optionally recycled to the direct osmosis step, for example, for use as or to produce fresh draw solution for the direct osmosis step. This ensures that the osmotic agent (e.g. magnesium sulphate) and/or additive(s) used to form the draw solution are at least partly re-used. Alternatively, a portion of the residual solution may be discarded.

By allowing solutes, such as sodium chloride, to pass through the nanofiltration membrane, the concentration of solutes, such as sodium chloride, on the retentate-side of the selective membrane of the reverse osmosis step is kept below a threshold value, reducing the risk of corrosion of process equipment. Although the nanofiltration membrane can allow solutes, such as sodium chloride, to pass into the filtrate, the concentration of such solutes can be kept below a threshold value by controlling the frequency and/or duration of the nanofiltration purging step. In this way, a balance may be struck between the risks associated with the build-up of any corrosive solutes in the process equipment and the purity of separated solvent eventually obtained.

The filtrate from the nanofiltration step may optionally be combined with the filtrate from the reverse osmosis step and used, for example, as clean water.

The direct osmosis step may be carried out in the absence of applied pressure. For example, the direct osmosis step may be carried out at a pressure of 1 to 40 bar, preferably 2 to 20 bar. Because solvent flows across the selective membrane by direct osmosis, the draw solution becomes pressurised by the influx of solvent. This pressure may be used to generate or supplement the pressure required for the subsequent reverse osmosis and/or nanofiltration steps.

The selective membrane employed in the direct osmosis step may have an average (e.g. mean) pore size of 0.5 to 80 Angstroms, preferably, 2 to 50 Angstroms. In a preferred embodiment, the membrane has an average (e.g. mean) pore size of from 3 to 30 Angstroms. In one embodiment, the direct osmosis step is carried out using a membrane having an average (e.g. mean) pore size of 1 to 10 Angstroms. In another embodiment, the membrane is a nanofiltration membrane having an average (e.g. mean) pore size of 5 to 60 Angstroms. Pore size (e.g. mean pore size) may be measured using any suitable technique. For example, a differential flow method may be employed (Japan Membrane Journal, vol. 29; no. 4; pp. 227 - 235 (2004)).

Suitable selective membranes for the direct osmosis step include integral membranes and composite membranes. Specific examples of suitable membranes include membranes formed of cellulose acetate (CA) and/or cellulose triacetate (CTA), such as or similar to those used in the study of McCutcheon et al., Desalination 174 (2005) 1-11 and membranes formed of polyamide (PA). An array of membranes may be employed. Other examples of suitable membranes include Toyobo Hollow Fibre (Hollowsep).

The selective membrane may be planar or take the form of a tube or hollow fibre. For example, a tubular configuration of hollow fine fibre membranes may be used.

If desired, the membrane may be supported on a supporting structure, such as a mesh support. When a planar membrane is employed, the sheet may be rolled such that it defines a spiral in cross-section. When a tubular membrane is employed, one or more tubular membranes may be disposed within a housing or shell. The source solution may be introduced into the housing, whilst the draw solution may be introduced into the tubes or vice-versa.

The average (e.g. mean) pore size of the selective membrane used in the direct osmosis step may be larger than the average (e.g. mean) pore size of the selective membrane used in the reverse osmosis step, but smaller than or similar to the average (e.g. mean) pore size of the nanofiltration membrane.

As mentioned above, a selective permeable membrane may be positioned between a source solution and a draw solution having a higher solute concentration than the source solution. The difference in concentration causes liquid solvent to flow across the membrane to dilute the draw solution by direct osmosis, leaving a concentrated source solution on the retentate-side of the membrane. In a preferred embodiment, this concentrated source solution is contacted with one side of a selective permeable membrane in a further direct osmosis unit. The opposite side of the membrane may be contacted with a solution, such as a waste solution, having a lower solute concentration than the concentrated source solution. The difference in solute concentration causes solvent to flow from the waste solution by direct osmosis to dilute the concentrated source solution. Prior to being contacted with the selective membrane in the further direct osmosis unit, the concentrated source solution may be concentrated further, for example, by evaporating solvent from the solution using thermal methods. In one embodiment, the concentrated source solution may be introduced into a solar pond.

Once diluted in the further direct osmosis unit, the source solution may be used, for example, for irrigation and other non-potable purposes. The diluted source solution may be further treated by membrane separation and/or mechanical or chemical techniques to reduce the concentration of certain solutes below the allowable limits. For example, where the source water is used for irrigation, the Boron level and that of other undesirable solutes needs to be kept below the allowable limit for such applications. This embodiment of the invention can be used to integrate, for example, a desalination plant with a waste solution treatment plant.

The waste solution may be waste water, for example, containing industrial or domestic waste. The waste water stream may contain sewage. Preferably, the waste water is treated to reduce the organic content of the waste water prior to contacting the waste water with the selective membrane in the further osmosis unit. By treating a waste solution in a further osmosis unit in this manner, it is possible to concentrate the waste water stream, thereby reducing the volume of waste requiring treatment/disposal.

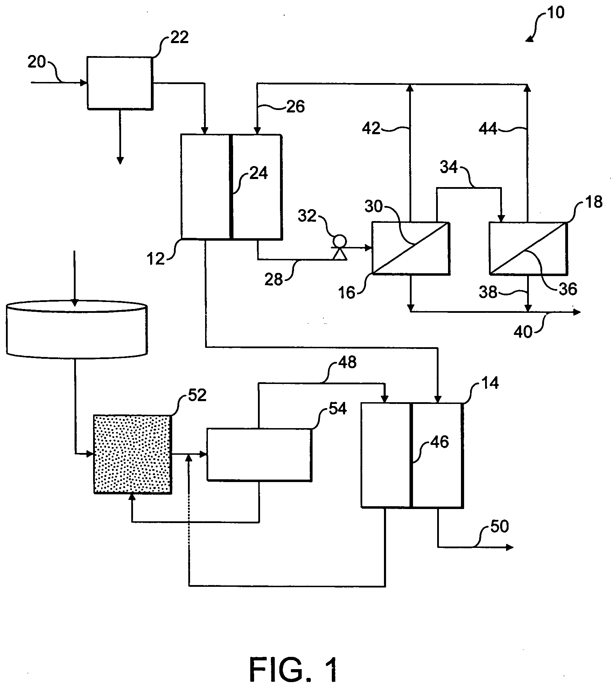

These and other aspects of the invention will now be described with reference to the accompanying Figure, which is a schematic diagram of an apparatus for carrying out an embodiment of the process of the present invention.

The Figure depicts an apparatus 10 comprising a first osmosis unit 12, a second osmosis unit 14, a reverse osmosis unit 16 and a nanofiltration unit 18.

The first osmosis unit 12 is coupled to a source of seawater via line 20. The seawater may optionally be treated with anti-scaling and antimicrobial agents (not shown) in the pre-treatment unit 22. The osmosis unit 12 may be partially or fully submerged in the source water to reduce the pre-treatment and/or pumping requirements. The treated seawater is then introduced into the first osmosis unit 12 and contacted with one side of a selective membrane 24. A draw solution 26 of magnesium sulphate is contacted with the opposite side of the selective membrane 24. As the initial solute concentration and osmotic pressure of the draw solution 26 is greater than the solute concentration and osmotic pressure of the seawater, liquid water flows across the membrane 24 to dilute the draw solution 26 by direct osmosis. Sodium chloride in the seawater may also flow across the membrane 24 in this direct osmosis step. Accordingly, the diluted draw solution 28 emerging from the osmosis unit 12 includes sodium chloride in addition to magnesium sulphate.

The diluted draw solution 28 is introduced into the reverse osmosis unit 16 and passed through the selective membrane 30 at elevated pressures of 60 to 80 bar. The pressure required for this reverse osmosis step is provided in part by the flux of water flowing across the membrane 24 in the direct osmosis step, and in part by the pump 32.

The average (e.g. mean) pore size of the selective membrane 30 is sufficiently small to prevent the sodium chloride and the magnesium sulphate in the draw solution 28 from passing through the selective membrane 30. Accordingly, the filtrate (water) passing through the selective membrane 30 is substantially free from sodium chloride and magnesium sulphate.

The residual solution on the retentate-side of the selective membrane 30 has a high concentration of sodium chloride and magnesium sulphate including solutes of chemical additives and other solutes that might diffuse from seawater. To prevent the concentration of sodium chloride on the retentate-side of the membrane 30 from reaching corrosive levels, this residual solution is purged by introducing a portion 34 of the residual solution intermittently into the nanofiltration unit 18. The average (e.g. mean) pore size of the nanofiltration membrane 36 in the nanofiltration unit 18 is sufficiently small to prevent magnesium sulphate from passing through the membrane 36. However, sodium chloride is not fully retained by the membrane 36 and flows through the membrane as a solution 38 of sodium chloride, which is combined with the filtrate from the reverse osmosis unit 16 to produce a clean water stream 40. Although the nanofiltration membrane 36 allows most of the sodium chloride to pass into the clean water stream 40, the concentration of sodium chloride in the clean water stream 40 can be kept below a threshold value by controlling the frequency and/or duration of the nanofiltration purging step. In this way, a balance may be struck between the risks associated with the build-up of corrosive sodium chloride in the process equipment and the purity of the water eventually obtained.

The residual solutions on the retentate-sides of membranes 30 and 36 are recycled to the osmosis unit 12 via lines 42 and 44, respectively, for use as fresh draw solution 26.

As described above, the first osmosis unit 12 is operated under direct osmosis conditions, which cause water to flow across the selective membrane 24 to dilute the draw solution 26. It may also be desirable to assist the osmosis process by applying hydraulic pressure to increase water flux through the direct osmosis membrane. This flow of water leaves concentrated seawater on the retentate-side of the selective membrane 24. This concentrated seawater is introduced into a second osmosis unit 14 and contacted with one side of a selective membrane 46. The opposite side of the selective membrane 46 is contacted with a solution of waste water 48 having a solute concentration and osmotic pressure that are lower than the solute concentration and osmotic pressure of the concentrated seawater. This difference in solute concentration causes water to flow across the selective membrane 46 by direct osmosis to dilute the seawater solution. The resulting, dilute solution 50 is withdrawn from the osmosis unit 14 and used for irrigation.

Prior to introducing the waste water 48 into the second osmosis unit 14, the waste water is treated in an activated sludge unit 52 to reduce the biological oxygen demand (BOD) of the waste water 48. Thereafter, the waste water 48 may be treated in UV filtration unit 54 prior to being introduced into the osmosis unit 14. Once water is removed from the waste water stream 48 by osmosis, the concentrated waste water stream may be removed from the unit 14 and recycled, for example, to the UV pre-treatment step.

## Claims

1. A process for separating solvent from a source solution, which comprises
positioning a first selective membrane (24) between a source solution and a draw solution having a higher solute concentration than the source solution, such that solvent from the source solution flows across the selective membrane by direct osmosis to dilute the draw solution, leaving concentrated source solution on the retentate- side of the selective membrane,
wherein the source solution comprises a second solute, and wherein the draw solution comprises a first solute;
passing the diluted draw solution through a second selective membrane (30) under reverse osmosis conditions to separate solvent from the solution, and
intermittently passing at least a portion of the draw solution on the retentate-side of the second selective membrane through a nanofiltration membrane (36) to separate further solvent from the portion of draw solution, wherein a portion of the solution on the retentate-side of the nanofiltration membrane is recycled to the direct osmosis step;, wherein the solution that is passed through the second selective membrane under reverse osmosis conditions comprises the first solute and the second solute, wherein the first solute and second solute are substantially retained by the second selective membrane, and the first solute and not the second solute is substantially retained by the nanofiltration membrane in the nanofiltration step and wherein the second solute may pass the first selective membrane (24).

2. A process as claimed in claim 1, wherein the second solute is sodium chloride.

3. A process as claimed in claim 1 or 2, wherein the first solute is magnesium sulphate.

4. A process as claimed in any one of the preceding claims, wherein the reverse osmosis step is carried out at a pressure of at least 20 bar.

5. A process as claimed in any one of the preceding claims, wherein the nanofiltration step is carried out at a pressure of at least 20 bar.

6. A process as claimed in any one of the preceding claims, wherein the reverse osmosis step is carried out using as the second selective permeable membrane a membrane having an average pore size of 0.1 to 10 nm.

7. A process as claimed in any one of the preceding claims, wherein the nanofiltration step is carried out using a nanofiltration membrane having an average pore size of 0.4 to 8 nm.

8. A process as claimed in any one of the preceding claims, wherein the first selective membrane (24), the second selective membrane (30), and/or the nanofiltration membrane are contained in units that are at least partially submerged in the source solution.

9. A process as claimed in any one of the preceding claims, wherein a portion of the draw solution on the retentate-side of the second selective membrane is recycled to the direct osmosis step.

10. A process as claimed in any one of claims 1 to 9, which comprises
contacting concentrated source solution from the direct osmosis step with one side of a third selectively permeable membrane (46) and contacting a solution having a lower solute concentration than the concentrated source solution with the opposite side of the third selectively permeable membrane, such that solvent from the solution flows across the selective membrane by direct osmosis to dilute the concentrated source solution.

11. A process as claimed in claim 10, wherein the solution having a lower solute concentration than the concentrated source solution is waste water.

12. A process as claimed in claim 11, wherein the waste water is treated to reduce the organic content of the waste water prior to contacting the waste water with the third selective membrane.

## Patentansprüche

1. Verfahren zum Trennen von Lösungsmittel aus einer Ausgangslösung, umfassend das Positionieren einer ersten selektiven Membran (24) zwischen einer Ausgangslösung und einer Zuglösung mit einer höheren gelösten Konzentration als die Ausgangslösung, so dass das Lösungsmittel aus der Ausgangslösung durch direkte Osmose über die selektive Membran fließt, um die Zuglösung zu verdünnen, wobei die konzentrierte Ausgangslösung auf der Retentatseite der selektiven Membran verbleibt, wobei die Ausgangslösung einen zweiten gelösten Stoff umfasst, und wobei die Zuglösung einen ersten gelösten Stoff umfasst,
Durchleiten der verdünnten Zuglösung durch eine zweite selektive Membran (30) unter Umkehrosmosebedingungen, um das Lösungsmittel von der Lösung zu trennen, und intermittierendes Durchleiten mindestens eines Teils der Zuglösung auf der Retentatseite der zweiten selektiven Membran durch eine Nanofiltrationsmembran (36), um weiteres Lösungsmittel von dem Teil der Zuglösung zu trennen, wobei ein Teil der Lösung auf der Retentatseite der Nanofiltrationsmembran zu dem direkten Osmoseschritt rezykliert wird, wobei die Lösung, die unter Umkehrosmosebedingungen durch die zweite selektive Membran geleitet wird, den ersten gelösten Stoff und den zweiten gelösten Stoff umfasst, wobei der erste gelöste Stoff und der zweite gelöste Stoff im Wesentlichen von der zweiten selektiven Membran zurückgehalten werden, und wobei der erste gelöste Stoff, nicht jedoch der zweite gelöste Stoff, im Wesentlichen von der Nanofiltrationsmembran im Nanofiltrationsschritt zurückgehalten wird, und wobei der zweite gelöste Stoff die erste selektive Membran (24) passieren kann.

2. Verfahren nach Anspruch 1, wobei der zweite gelöste Stoff Natriumchlorid ist.

3. Verfahren nach Anspruch 1 oder 2, wobei der erste gelöste Stoff Magnesiumsulfat ist.

4. Verfahren nach einem der vorstehenden Ansprüche, wobei der Schritt der Umkehrosmose bei einem Druck von mindestens 20 bar durchgeführt wird.

5. Verfahren nach einem der vorstehenden Ansprüche, wobei der Nanofiltrationsschritt bei einem Druck von mindestens 20 bar durchgeführt wird.

6. Verfahren nach einem der vorstehenden Ansprüche, wobei der Schritt der Umkehrosmose unter Verwendung einer Membran mit einer mittleren Porengröße von 0,1 bis 10 nm als zweite selektiv permeable Membran durchgeführt wird.

7. Verfahren nach einem der vorstehenden Ansprüche, wobei der Nanofiltrationsschritt unter Verwendung einer Nanofiltrationsmembran mit einer mittleren Porengröße von 0,4 bis 8 nm durchgeführt wird.

8. Verfahren nach einem der vorstehenden Ansprüche, wobei die erste selektive Membran (24), die zweite selektive Membran (30) und/oder die Nanofiltrationsmembran in Einheiten enthalten sind, die zumindest teilweise in die Ausgangslösung eingetaucht sind.

9. Verfahren nach einem der vorstehenden Ansprüche, wobei ein Teil der Zuglösung auf der Retentatseite der zweiten selektiven Membran zu dem Schritt der direkten Osmose rezykliert wird.

10. Verfahren nach einem der Ansprüche 1 bis 9, umfassend das Inkontaktbringen einer konzentrierten Ausgangslösung aus dem direkten Osmoseschritt mit einer Seite einer dritten selektiv permeablen Membran (46), und das Inkontaktbringen einer Lösung mit einer geringeren Konzentration an gelöstem Stoff als die konzentrierte Ausgangslösung mit der gegenüberliegenden Seite der dritten selektiv permeablen Membran, so dass das Lösungsmittel aus der Lösung durch direkte Osmose über die selektive Membran fließt, um die konzentrierte Ausgangslösung zu verdünnen.

11. Verfahren nach Anspruch 10, wobei die Lösung mit einer niedrigeren Konzentration an gelöstem Stoff als die konzentrierte Ausgangslösung Abwasser ist.

12. Verfahren nach Anspruch 11, wobei das Abwasser behandelt wird, um den organischen Gehalt des Abwassers zu reduzieren, bevor das Abwasser mit der dritten selektiven Membran in Kontakt gebracht wird.

## Revendications

1. Procédé permettant la séparation d'un solvant d'une solution source, comprenant le positionnement d'une première membrane sélective (24) entre une solution source et une solution d'extraction possédant une concentration en soluté plus élevée que la solution source de sorte que le solvant provenant de la solution source s'écoule à travers la membrane sélective par osmose directe pour diluer la solution d'extraction, laissant la solution source concentrée du côté rétentat de la membrane sélective, ladite solution source comprenant un second soluté et ladite solution d'extraction comprenant un premier soluté ;
le passage de la solution d'extraction diluée à travers une deuxième membrane sélective (30) dans des conditions d'osmose inverse pour séparer le solvant de la solution et le passage par intermittence d'au moins une partie de la solution d'extraction du côté rétentat de la deuxième membrane sélective à travers une membrane de nanofiltration (36) pour séparer en outre le solvant de la partie de solution d'extraction, une partie de la solution du côté rétentat de la membrane de nanofiltration étant recyclée à l'étape d'osmose directe ; ladite solution passée à travers la deuxième membrane sélective dans des conditions d'osmose inverse comprenant le premier soluté et le second soluté, lesdits premier soluté et second soluté étant sensiblement retenus par la deuxième membrane sélective, et ledit premier soluté et pas le second soluté étant sensiblement retenu par la membrane de nanofiltration dans l'étape de nanofiltration et ledit second soluté pouvant passer la première membrane sélective (24).

2. Procédé selon la revendication 1, ledit second soluté étant du chlorure de sodium.

3. Procédé selon la revendication 1 ou 2, ledit premier soluté étant du sulfate de magnésium.

4. Procédé selon l'une quelconque des revendications précédentes, ladite étape d'osmose inverse étant effectuée à une pression supérieure ou égale à 20 bars.

5. Procédé selon l'une quelconque des revendications précédentes, ladite étape de nanofiltration étant effectuée à une pression supérieure ou égale à 20 bars.

6. Procédé selon l'une quelconque des revendications précédentes, ladite étape d'osmose inverse étant effectuée en utilisant en tant que deuxième membrane perméable sélective une membrane présentant une taille de pore moyenne allant de 0,1 à 10 nm.

7. Procédé selon l'une quelconque des revendications précédentes, ladite étape de nanofiltration étant effectuée en utilisant une membrane de nanofiltration possédant une taille de pore moyenne de 0,4 à 8 nm.

8. Procédé selon l'une quelconque des revendications précédentes, ladite première membrane sélective (24), ladite deuxième membrane sélective (30) et/ou ladite membrane de nanofiltration étant contenues dans des unités qui sont au moins partiellement immergées dans la solution source.

9. Procédé selon l'une quelconque des revendications précédentes, une partie de la solution d'extraction du côté rétentat de la deuxième membrane sélective étant recyclée à l'étape d'osmose directe.

10. Procédé selon l'une quelconque des revendications 1 à 9, comprenant la mise en contact de la solution source concentrée provenant de l'étape d'osmose directe avec un côté d'une troisième membrane sélectivement perméable (46) et la mise en contact d'une solution possédant une concentration de soluté plus faible que la solution source concentrée avec le côté opposé de la troisième membrane sélectivement perméable de sorte que le solvant provenant de la solution s'écoule à travers la membrane sélective par osmose directe pour diluer la solution source concentrée.

11. Procédé selon la revendication 10, ladite solution possédant une concentration de soluté plus faible que la solution source concentrée étant des eaux usées.

12. Procédé selon la revendication 11, lesdites eaux usées étant traitées pour réduire la teneur en matières organiques des eaux usées avant la mise en contact des eaux usées avec la troisième membrane sélective.
